# EUROPÄISCHE PATENTSCHRIFT

(11) **EP 0 625 651 B1**
(45) Veröffentlichungstag und Bekanntmachung des Hinweises auf die Patenterteilung: **15.01.1997**
(21) Anmeldenummer: 94107513.7
(22) Anmeldetag: 14.05.1994
(51) Int. Cl.: F16H 1/28, B25J 9/10

(54) **Verfahren zur Betriebsüberwachung des dynamischen Belastungs- und/oder Verschleisszustandes eines Getriebes und Einrichtung zu seiner Durchführung**
Method for the control of the dynamic and/or wear status of a transmission during operation and device for its application
Méthode de contrôle d'état de charge dynamique et/ou d'usure d'une transmission en opération et dispositif d'application

(30) Priorität: 19.05.1993 DE 4316817
(43) Veröffentlichungstag der Anmeldung: 23.11.1994
(73) Patentinhaber: DEWITTA-SPEZIALMASCHINENFABRIK WITTENSTEIN GmbH & CO. KG, D-97999 Igersheim (DE)
(72) Erfinder: Wittenstein, Manfred, D-97980 Bad Mergentheim (DE)
(74) Vertreter: Patentanwalts-Partnerschaft Rotermund + Pfusch

(56) Entgegenhaltungen:
- DE-A- 3 402 933
- DE-A- 3 618 391
- DE-A- 3 814 809
- US-A- 4 085 612
- SOVIET ENGINEERING RESEARCH. (STANKI I INSTRUMENTY & VESTNIK MASHINOSTROENIA MASHINOSTROCNIE), Bd.9, Nr.3, 1989, NEW YORK US Seiten 4 - 8 KARBOVSKII 'Estimation and reduction methods of thermal deformations in industrial robots'
- DATABASE WPI Week 7746, Derwent Publications Ltd., London, GB; AN 77-K2799Y & SU-A-531 127 (MOSCOW BAUMAN) 17. Januar 1977

## Beschreibung

Die Erfindung betrifft ein Verfahren zur Betriebs-Überwachung des dynamischen Belastungs- und/oder Verschleißzustandes eines Getriebes, insbesondere eines spielarmen Planetengetriebes.

Bei insbesondere hochübersetzenden spielarmen bzw. spielfreien Getrieben mit hohen Eingangsdrehzahlen und Abtriebsmomenten soll während des Betriebes eine kontinuierliche Kontrolle der jeweiligen Belastung, insbesondere von während des Betriebes auftretenden Störfaktoren möglich sein. Dabei sollen nicht nur verschiedene Kontrolldaten erfaßt, sondern auch miteinander kombiniert und nach einem vorgegebenen Programm ausgewertet dazu verwendet werden, den Getriebebetrieb belastungsmäßig aufzuzeigen und/oder zu beeinflussen. Speziell durch eine betriebsverhaltensabhängige Beeinflussung soll das betreffende Getriebe beispielsweise vor Überlastungen geschützt werden können. Auch soll es damit möglich sein, bei Stellgetrieben, verschleißbedingte Stellgenauigkeitsverschlechterungen festzustellen und auszugleichen.

Durch Aufzeichnung und bestimmte vorgegebene Auswertung der kontinuierlich ermittelten Kontrolldaten sollen sich praxisgerechte exakte Hinweise auf Wartungs- und Nachstellarbeiten gewinnen lassen. Die Aufzeichnungen sollen beispielsweise auch Aufschluß über die Hauptbelastungsarten und Störfaktoren über eine längere Betriebsdauer geben. Damit soll eine Optimierung kompletter Antriebssysteme mit dem Ziel einer Anlagen-Größenreduzierung möglich sein.

Eine grundsätzliche Lösung zur Erreichung der vorgenannten Ziele zeigt ein nach den Merkmalen des Anspruchs 1 ausgestaltetes Verfahren auf.

Diese Lösung beruht auf dem Gedanken, daß sich bei dem Betrieb eines Getriebes eine Drehwinkelabweichung zwischen Getriebean- und Abtriebswelle einstellt, die unter anderem von der Bauart, der Fertigungsgenauigkeit, der Steifigkeit und der Betriebsbelastung des Getriebes abhängt.

Bei einem beispielsweise in einem Stellantrieb für einen Industrieroboter eingesetzten Planetengetriebe finden laufend Drehrichtungsänderungen statt. Es ergeben sich dabei unter anderem von der jeweiligen Momentenbelastung abhängige Drehwinkelabweichungen zwischen An- und Abtriebswelle. In der Zeichnung zeigt
- Fig. 1: den kompletten meßtechnisch ermittelten Verlauf des Ver-Drehwinkels innerhalb eines hin- und hergehenden Stellantrieb-Getriebes als Funktion der Momentenbelastung in positiver und negativer Drehrichtung.

Der Drehwinkel wird dabei abtriebsseitig am Getriebe bei festgesetzter Antriebswelle ermittelt. Die so gemessene Winkelabweichung ist lastabhängig. Der gesamte Kurvenverlauf wird als Hysterese bezeichnet. Die Zeichnung zeigt in
- Fig. 2: den prinzipiellen Verlauf einer drehmomentabhängigen Drehwinkel-Veränderung.

Hinsichtlich der Steifigkeit bzw. der Nachgiebigkeit sind zwei Bereiche zu unterscheiden. Bei kleinen Momenten ist ein deutlicher Abfall der Steifigkeit festzustellen. In der Fachliteratur wird hier von Reststeifigkeit gesprochen. Erst bei Momenten größer als etwa 2 bis 3 % des Nennmomentes wird die eigentliche Steifigkeit des Getriebes ermittelt.

Die Eignung eines Getriebes für den dynamischen Einsatz läßt sich recht gut an dem jeweiligen getriebetypischen Steifigkeitsverlauf ablesen. Zwischen Drehmoment und Verdrehwinkel ist ein möglichst linearer Zusammenhang erwünscht, sowie ein geringes Ansteigen des Verdrehwinkels bei der Erhöhung des Momentes. Eine geringe Steigung ist das Maß für eine hohe Steifigkeit. Ein typischer Steifigkeitsverlauf läßt sich auch bei stehender Abtriebswelle und mit Drehmoment belasteter Antriebswelle ermitteln. Dies ist im Sinne der vorliegenden Erfindung für eine permanente Diagnose des betreffenden Getriebes wichtig.

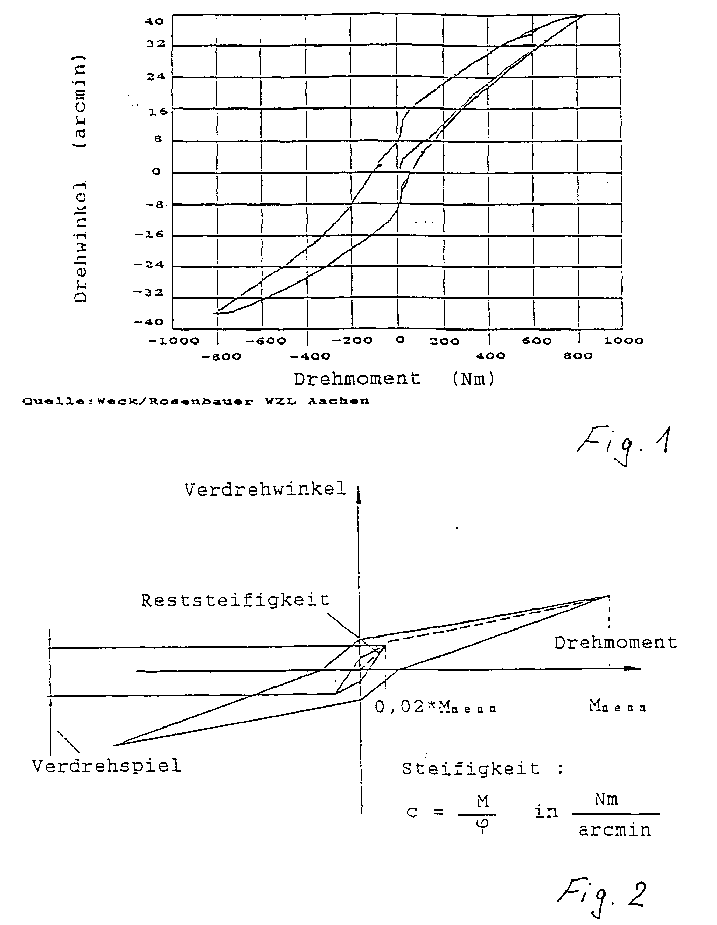

Das statisch bedingte Verdrehspiel eines Getriebes wird entsprechend der Darstellung in Fig. 2 bei einem Torsionsmoment, das etwa 2% des Nennmomentes entspricht, d.h. praktisch bei unbelastetem Getriebe, ermittelt.

Ein hohes Maß an Spielarmut, wie es sich aus der Forderung nach guten dynamischen Eigenschaften eines Getriebes sowie einer durch dieses erreichbaren hohen Positionier- bzw. Wiederholgenauigkeit ergibt, setzt bei insbesondere einem Planetengetriebe in erster Linie eine hohe Maßgenauigkeit der Getriebeteile voraus.

Mit Bezug auf den über Getriebe erfolgenden Antrieb bei Industrierobotern ist die wesentliche Forderung die Realisierung einer präzisen Positionierung bei hohen Bahngeschwindigkeiten und kleinen Zykluszeiten.

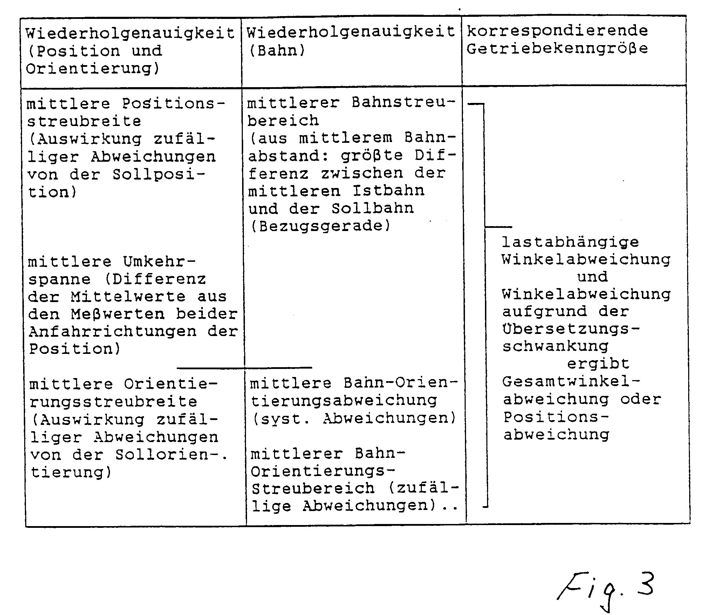

Bei den Zeichnungen ist eine Tabelle enthalten und diese zeigt in
- Fig. 3: Begriffsdefinitionen zu Genaugkeitskenngrößen bei Antrieben für Industrieroboter nach VDI-Richtlinie 2861/2.

Bei diesen Begriffsdefinitionen wird zwischen der Wiederholgenauigkeit bei einer definierten Bahn unterschieden. Diese Genauigkeitskenngrößen beziehen sich auf den Arbeitspunkt bzw. bei Industrierobotern mit integrierten Werkzeugen auf den Werkzeugarbeitspunkt. Die korrespondierenden Getiebekenngrößen sind in der Tabelle nach Fig. 3 in einer zusätzlichen rechten Spalte aufgeführt.

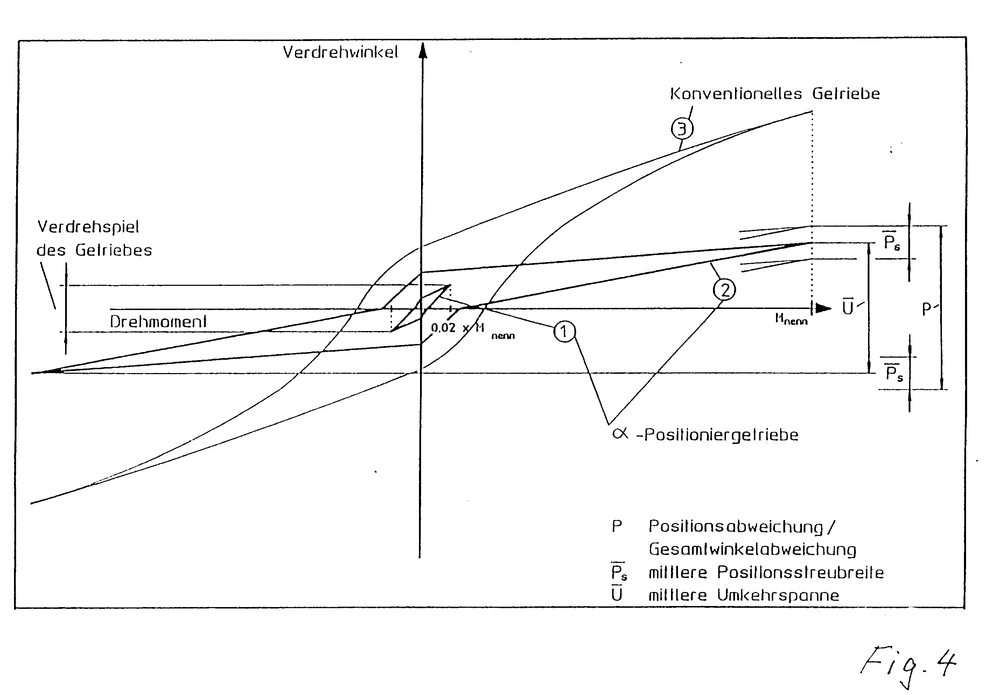

Bei den Zeichnungen ist dargestellt in
- Fig.4: der Zusammenhang zwischen den Kenngrößen eines Industrieroboters und der getriebetypischen Verdrehwinkel-Hysterese.

Die Summe aus der in der Tabelle nach Fig. 3 definierten mittleren Umkehrspanne und dem entsprechenden Anteil der mittleren Positionsstreubreite ist die durch das Getriebe verursachte Positionsabweichung bzw. die Gesamtwinkelabweichung des Getriebes.

Bei der sogenannten Offline-Programmierung eines über ein Getriebe angetriebenen Industrieroboters wird eine hohe Positions- und Bahngenauigkeit im Sinne der Definitionen nach der Tabelle in Fig. 3 gefordert.

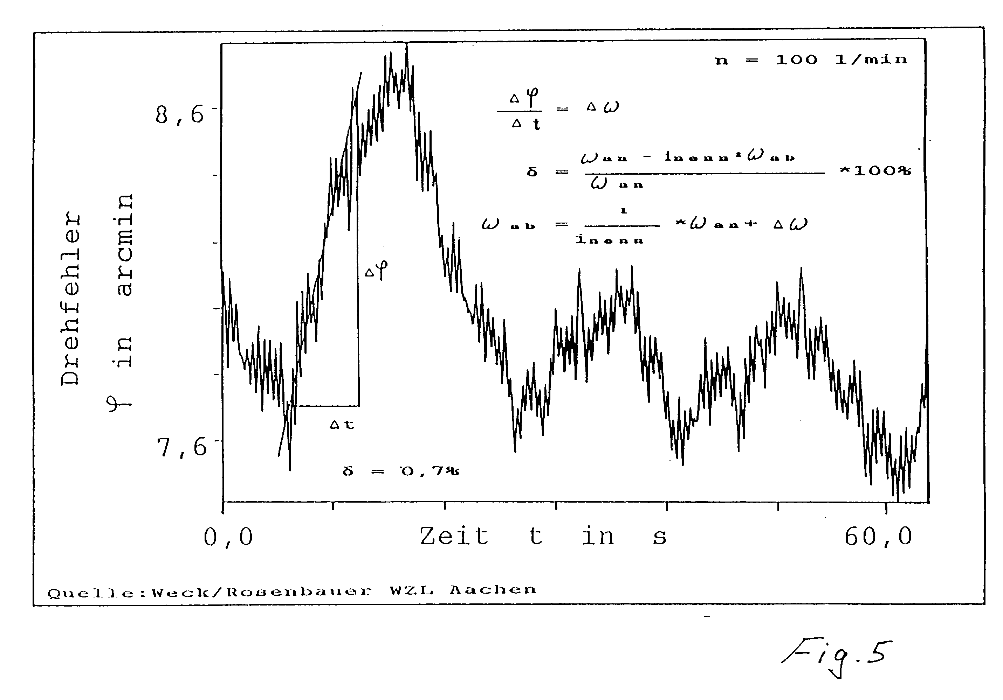

Mit Bezug auf die dynamische Verdrehwinkelgenauigkeit eines Getriebes zeigt bei den Zeichnungen
- Fig. 5: ein Diagramm mit einem typischen Verlauf der Übersetzungsschwankung bei einer vollständigen Umdrehung der Getriebe-Abtriebswelle.

Die in dem Diagramm aufgezeigten Übersetzungsschwankungen resultieren aus Fertigungstoleranzen bei dem Getriebe sowie aus Betriebsverschleiß. In dem gezeigten Beispiel weist die Winkelabweichung einen Streubereich von etwa 1,4 Winkelminuten auf.

Aus dem Quotienten des Verdrehwinkels und der Zeit läßt sich die Änderung der Winkelgeschwindigkeit ermitteln. Bezieht man die Änderung der Winkelgeschwindigkeit auf die theoretische Winkelgeschwindigkeit, so errechnet sich die Gleichförmigkeit in %. In dem gezeigten Diagramm ist die Winkelgeschwindigkeit mit omega bezeichnet und die Indexe "an" und "ab" stehen für An- und Abtriebswelle.

Die Gleichförmigkeit der Bewegungsübertragung ist für viele Einsatzfälle ein entscheidendes Kriterium. Als Beispiel sei das Laserschweißen von Bauteilen für die Raumfahrt genannt. Schon geringste Ungleichförmigkeiten beim Schweißvorgang führen zu einer ungleichmäßigen Oberfläche und zu Festigkeitsunterschieden in der Schweißnaht.

Die bei einem Getriebe vorliegende Gesamtwinkel- bzw. Positionsabweichung ergibt sich als Summe der Abweichungen aufgrund der Übersetzungsschwankung nach Fig. 5 und der lastabhängigen Winkelabweichungen nach Fig. 4. Die maximale Winkelabweichung ergibt sich also aus der maximalen Übersetzungsschwankung und der lastabhängigen Winkelabweichung bei Nennlast.

Bei beispielsweise Planetengetrieben kann bauartbedingt die Übersetzungsschwankung klein gehalten werden und ist in der Regel deutlich kleiner als die lastabhängige Winkelabweichung.

Aufgrund der vorstehend dargelegten ausführlichen Erläuterungen zum Genauigkeitsverhalten eines Getriebe und zwar insbesondere eines Planetengetriebes kann das erfindungsgemäße Verfahren in hervorragender Weise zur getriebeverschleißunabhängigen Konstanthaltung des vorgegebenen Zustellweges eines Stellantriebes für Roboter eingesetzt werden. Die Lösung für diesen Einsatz ist in Anspruch 3 festgehalten.

Weitere zweckmäßige Ausgestaltungen des erfindungsgemäßen Verfahrens sind Gegenstand der Unteransprüche 4 und 5.

Als Einrichtung zur Durchführung der erfindungsgemäßen Regelverfahren ist eine solche nach Anspruch 6 besonders geeignet.

Vorteilhafte Weiterbildungen der Einrichtung enthalten die Ansprüche 7 und 8.

Durch einen Verformungsmesser nach Anspruch 7 ist eine exakte direkte Erfassung der jeweiligen Momentenlastzustände des Getriebes möglich.

Ein seismischer Geber nach Anspruch 8, der ein Beschleunigungsgeber sein kann, ermöglicht wiederum eine direkte Erfassung der Drehwinkelschwankungen. Bei einer Anbringung an der Abtriebswelle kann die Meßwertübertragung über einen an der Abtriebswelle angreifenden Schleifkontakt erfolgen.

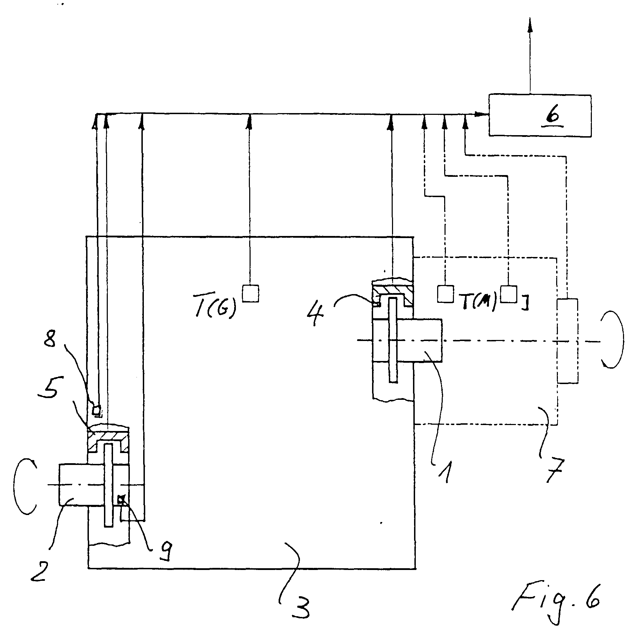

Ein Ausführungsbeispiel einer erfindungsgemäßen Regeleinrichtung ist in der Zeichnung dargestellt. Darin zeigt
- Fig. 6: ein zahnradgetriebe mit einem antriebs- und abtriebsseitigen Drehwinkel-Positionsgeber in Wirkverbindung mit der jeweiligen An- bzw. Abtriebswelle.

Mit der Antriebswelle 1 und der Abtriebswelle 2 eines Getriebes 3 stehen jeweils Positionsgeber 4 bzw. 5 in Wirkverbindung, die zwischen der An- und Abtriebswelle 1 bzw. 2 während des Getriebebetriebes auftretende Verdrehwinkel kontinuierlich ermitteln und einer Auswerteschaltung 6 zuleiten können.

Als Antrieb greift an der Antriebswelle 1 ein elektrischer Stell-Motor 7 an, dessen jeweiliger Stromverbrauch I ebenfalls der Auswerteschaltung 6 zugeführt wird und als Maß für die Drehmoment-Belastung des Getriebes 3 dient. Eine genauere Drehomneten-Ermittlung ist über einen an einem der kraftübertragenden Teile des Getriebes ansetzbaren Verformungsmesser (8) möglich. Gedacht ist hierbei an Elemente, die durch die Getriebemomentenbelastung erzeugte Verformungen an einem der momentenbelasteten Getriebeteile erfassen und in der Form eines elektrischen Signales weiterleiten können. Solche Verformungsmesser sind damit Kraftmesser, die beispielsweise Dehnungsmeßstreifen, Piezoelemente, induktive Geber oder magnetostriktiv wirkende Elemente sein können. Bei einem Planetengetriebe bietet sich für die Anbringung eines solchen Verformungsmessers (8) insbesondere das stillstehende der Abtriebseite nächstgelegene Hohlrad an. Als weiterer Einflußfaktor wird die Temperatur T(G) des Getriebes der Auswerteschaltung 6 auch noch aufgegeben.

In der Auswerteschaltung 6 werden die vorgenannten Meßdaten nach einem vorgegebenen Programm ausgewertet. Das Ergebnis dieser Auswertung kann angezeigt oder zur Korrektur der Steuerdaten des Stell-Motors 7 benutzt werden.

Bei dem Beispiel nach Fig. 6 kann die im Getriebebetrieb zu ermittelnde Winkelverdrehung auch zwischen der Antriebswelle des Motors 7 und der Getriebeabtriebswelle 2 erfolgen. Der Positionsgeber 4 ist hierfür dann an der Motor 7-Welle anzusetzen. Für diesen Fall ist auch noch die Temperatur T(M) des Motors 7 der Auswerteschaltung 6 als Meßwert zuzuführen.

Mit der vorbeschriebenen Meß- und Steuerungseinrichtung ist es möglich, durch einen Verschleiß der Getriebeteile bedingte Stellungenauigkeiten bei einem Roboter-Stellgetriebe entgegenzusteuern.

Ein anderer Anwendungsfall besteht darin, das Getriebeverhalten laufend anzuzeigen oder aufzuzeichnen, um daraus unter anderem Rückschlüsse auf das auftretende Belastungsprofil ziehen zu können oder um beispielsweise auf unzulässig hohe Übersetzungsschwankungen aufmerksam gemacht zu werden. Durch den Einsatz einer derartigen Überwachungs- und ggf. gleichzeitig auch Steuereinrichtung können Genauigkeitsstellgetriebe einerseits einsatzorientiert ausgelegt und andererseits dem tatsächlichen Verschleiß entsprechend gewartet oder ausgewechselt werden. Insofern wird eine wartungsunabhängige Laufzeitoptimierung erreicht. Auch können die bisher üblichen sicherheitsbedingten Überdimensionierungen weitgehendst entfallen, da unzulässiges Betriebsverhalten durch die erfindungsgemäßen Überwachungsmaßnahmen sofort festgestellt und damit behoben werden kann. Übersetzungs- und damit Drehwinkelschwankungen können durch einen beispielsweise in der Abtriebswelle 2 direkt angebrachten Beschleunigungsgeber 9 sehr genau erfaßt und als elektrisches Signal der Auswerteschaltung 6 mit zugeleitet werden. Die elektrische Signalübertragung von dem mit der Abtriebswelle 2 rotierenden Beschleunigungsgeber 9 kann im einfachsten Falle über einen an der Welle angreifenden Schleifkontakt erfolgen.

## Patentansprüche

1. Verfahren zur Betriebs-Überwachung des dynamischen Belastungs- und/oder Verschleißzustandes eines Getriebes, insbesondere eines spielarmen Planetengetriebes,
**dadurch gekennzeichnet,**
daß die sich im Betrieb einstellenden Drehwinkeldifferenzen zwischen Getriebean- und Abtriebswelle zusammen mit den jeweils zugehörigen Getriebe-Lastzuständen als Istwerte gemessen und über ein Auswerteprogramm mit den entsprechenden Sollwerten verglichen werden.

2. Verfahren nach Anspruch 1,
**dadurch gekennzeichnet,**
daß der Ist-Sollwertvergleich unter Berücksichtigung der bei der Istwertermittlung an den Istwert-Ermittlungsstellen jeweils mit gemessenen Augenblickstemperaturen erfolgt.

3. Verfahren nach Anspruch 1 oder 2 zur getriebeverschleißunabhängigen Konstanthaltung des vorgegebenen Zustellweges für beispielsweise einen Roboter,
**dadurch gekennzeichnet,**
daß das Vergleichsergebnis aus ermittelten Istwerten und vorgegebenen Sollwerten als Maß zur verschleißausgleichenden Anpassung der Steuerimpulse eines die Zustellwege bestimmenden Stellantriebes herangezogen wird.

4. Verfahren nach einem der vorhergehenden Ansprüche,
**dadurch gekennzeichnet**,
daß die zwischen Getriebean- und Abtriebswelle als Übersetzungsschwankung auftretenden dynamischen Drehwinkelabweichungen ausgewertet werden.

5. Verfahren nach einem der vorhergehenden Ansprüche bei einem elektrischen Getriebeantriebsmotor, insbesondere Stellmotor,
**dadurch gekennzeichnet**,
daß der getriebeeingangsseitige Wellen-Drehwinkel derjenige der Motorantriebswelle ist.

6. Einrichtung zur Durchführung der Verfahren nach einem der vorhergehenden Ansprüche,
**dadurch gekennzeichnet,**
daß an der An- und Abtriebswelle (1 bzw. 2) des zu überwachenden Getriebes (3) jeweils ein elektrischer Drehwinkel-Positionsgeber (4,5) vorgesehen ist, die ihre jeweils ermittelten Werte einer Auswerteeinheit übermitteln.

7. Einrichtung nach Anspruch 6,
**dadurch gekennzeichnet,**
daß an einem der kraftübertragenden Teile des Getriebes ein Verformungsmesser (8) zur Bestimmung der durch die Getriebemomentenbelastung erzeugten Verformung dieses Teiles angebracht ist, und daß die Meßwerte dem Auswerteprogramm für den Ist- Sollwerte-Vergleicher als Maß für die Drehmomentenbelastung des Getriebes zugeführt wird.

8. Einrichtung nach Anspruch 6 oder 7 zur Durchführung eines Verfahrens mit den kennzeichnenden Merkmalen des Anspruchs 4,
**dadurch gekennzeichnet,**
daß Drehwinkelschwankungen der insbesondere Abtriebswelle (2) durch einen daran angebrachten seismischen Geber (9) wie beispielsweise einen Beschleunigungsgeber ermittelt und als elektrisches Signal dem Auswerteprogramm zugeführt werden.

## Claims

1. Method of monitoring the dynamic load and/or wear state of a gear system, in particular a low-backlash planetary gear system, characterised in that the differences in rotational angle adjusted during operation between gear input and output shaft together with the respective associated gear load states are measured as actual values and compared with the corresponding set values via an evaluation program.

2. Method according to claim 1, characterised in that comparison between the actual value and set value takes place while allowing for the determination of the actual value at the actual value determination points with measured instantaneous temperatures in each case.

3. Method according to claim 1 or 2 for keeping the predetermined adjustment path, for example for a robot, constant independently of gear wear, characterised in that the result of comparison between determined actual values and predetermined set values is used as a gauge of the wearcompensating adaptation of the control pulses of an actuator defining the adjustment paths.

4. Method according to one of the preceding claims, characterised in that the dynamic rotational angle deviations occurring as variation in transmission between gear input and output shaft are evaluated.

5. Method according to one of the preceding claims in an electric gear drive motor, in particular servomotor, characterised in that the rotational angle of the shaft on the gear input side is that of the motor input shaft.

6. Device for carrying out the method according to one of the preceding claims, characterised in that a respective electric rotational angle locator (4, 5) which transmits its respectively determined values to an evaluating unit is provided on the input and output shaft (1 and 2) of the gear system (3) to be monitored.

7. Device according to claim 6, characterised in that, on one of the force-transmitting parts of the gear system there is arranged a deformation meter (8) for defining the deformation of this part produced by the gear torque loading and in that the measured values are supplied to the evaluating program for the actual value/set value comparator as a gauge of the torque loading of the gear system.

8. Device according to claim 6 or 7 for carrying out a method having the characterising features of claim 4, characterised in that variations in torque angle of the output shaft (2) in particular are determined by a seismic transducer (9) arranged thereon such as an acceleration transducer and are supplied to the evaluating program as an electrical signal.

## Revendications

1. Méthode pour le contrôle en service de l'état dynamique de charge et/ou d'usure d'une transmission, en particulier d'une transmission planétaire à faible jeu, caractérisée en ce que les différences d'angle de rotation apparaissant en service entre l'arbre de commande de la transmission et l'arbre de sortie sont mesurées en même temps que les états de charge respectifs de la transmission sous la forme de valeurs réelles et sont mesurées par un programme d'analyse avec les valeurs de consigne correspondantes.

2. Méthode selon la revendication 1, caractérisée en ce que la comparaison valeur réelle-valeur de consigne s'effectue respectivement avec des températures instantanées mesurées en tenant compte des valeurs obtenues lors du calcul de valeurs réelles aux points de calcul de valeurs réelles.

3. Méthode selon la revendication 1 ou 2 pour la stabilisation, indépendante de l'usure de la transmission, de la course de déplacement prédéfinie pour par exemple un robot, caractérisée en ce que le résultat de la comparaison à partir de valeurs réelles calculées et de valeurs de consigne prédéfinies est pris en compte comme référence pour l'adaptation, compensant l'usure, des impulsions de commande d'un servomoteur qui détermine les courses de déplacement.

4. Méthode selon l'une quelconque des revendications précédentes, caractérisée en ce que les écarts dynamiques d'angle de rotation qui apparaissent entre l'arbre de commande de la transmission et l'arbre de sortie sous la forme d'une variation du rapport de transmission sont analysés.

5. Méthode selon l'une quelconque des revendications précédentes avec un moteur électrique de commande de transmission, en particulier un servomoteur, caractérisée en ce que l'angle de rotation de l'arbre côté entrée de la transmission est celui de l'arbre de commande de moteur.

6. Appareil pour l'application des méthodes selon l'une quelconque des revendications précédentes, caractérisé en ce que, sur l'arbre de commende et l'arbre de sortie (1 et 2) de la transmission (3) à contrôler, il est prévu sur chacun un transmetteur électrique de position à angle de rotation (4,5) qui transmettent leurs valeurs respectivement calculées à une unité d'analyse.

7. Appareil selon la revendication 6, caractérisé en ce qu'un déformètre (8) est disposé sur l'une pièces de la transmission transmettant la force pour déterminer la déformation de cette pièce générée par la charge du couple sur la transmission, et en ce que les valeurs mesurées sont acheminées au programme d'analyse pour le comparateur valeurs réelles-valeurs de consigne comme référence pour la charge par le couple de la transmission.

8. Appareil selon la revendication 6 ou 7 pour l'application d'une méthode avec les caractéristiques significatives de la revendication 4, caractérisé en ce que les variations de l'angle de rotation de l'arbre de sortie (2) en particulier sont calculées par un capteur (9) sismique fixé dessus tel qu'un transmetteur d'accélération et sont acheminées au programme d'analyse sous la forme d'un signal électrique.
